# EUROPÄISCHE PATENTSCHRIFT

(11) **EP 0 877 290 B1**
(45) Veröffentlichungstag und Bekanntmachung des Hinweises auf die Patenterteilung: **13.10.2004**
(21) Anmeldenummer: 98105788.8
(22) Anmeldetag: 30.03.1998
(51) Int. Cl.: G03D 13/00

(54) **Prüfmaterialspeicher-und-zuführeinrichtung**
Testmaterial storage- and transfer device
Dispositif de stockage et de transfert de matériau d'essai

(30) Priorität: 06.05.1997 EP 97107461
(43) Veröffentlichungstag der Anmeldung: 11.11.1998
(73) Patentinhaber: GRETAG IMAGING AG, 8105 Regensdorf (CH)
(72) Erfinder: Heller, Martin, 8050 Zürich (CH); Knecht, Hugo, 8165 Schöfflisdorf (CH)
(74) Vertreter: Schwabe - Sandmair - Marx

(56) Entgegenhaltungen:
- EP-A- 0 437 814
- EP-A- 0 601 193
- EP-A- 0 629 916
- EP-A- 0 670 519

## Beschreibung

Die Erfindung betrifft eine Prüfmaterialspeicher- und -zuführeinrichtung nach dem Patentanspruch 1, die einen lichtdichten Behälter aufweist, der ein Austragmaul aufweist, um ein fotografisches Prüfmaterial aus dem Behälter ausgeben zu können. Ferner betrifft die Erfindung einen fotografischen Printer mit den im Oberbegriff des Patentanspruchs 10 aufgeführten Merkmalen, der mit einer Prüfmaterialspeicher- und - zuführeinrichtung ausgestattet ist.

Bei der Weiterbehandlung von fotografischen Filmen ist es erforderlich, einerseits den Negativ- oder Positivfilm zu entwickeln und andererseits im Bedarfsfall den Film auf ein fotografisches Papier zu übertragen, um Papierabzüge von den Filmpositiven bzw. Filmnegativen anzufertigen. Dabei werden verschiedene Arten von Chemikalien eingesetzt, die in der Regel in Entwicklungsabschnitten entsprechender Anlagen vorgesehen sind. Dabei ist es erforderlich zu prüfen, ob die Entwicklungsbäder, durch die das fotografische Material hindurchgeleitet wird, um entwickelt zu werden, mit ihren Eigenschaften noch innerhalb eines Toleranzintervalls sind oder ob die Entwicklerlösungen ausgetauscht oder anderweitig behandelt werden müssen, um wieder eine ausreichende Entwicklungsfähigkeit zu haben.

Hier werden bei der Überprüfung der Entwicklerlösungen in einem Filmprozessor Filmchemie-Teststreifen eingesetzt, die durch einen Entwicklungsbereich eines Filmprozessors hindurchgeleitet werden. Der Filmchemie-Teststreifen weist dabei eine vordefinierte Belichtung auf. Nach der Entwicklung wird der Filmchemie-Teststreifen mit einem Transmissionsdensitometer ausgemessen, um aufgrund der Meßergebnisse auf den Zustand der Entwicklerlösungen, Spülbäder usw. schließen zu können. Dabei mußte bislang das Bedienungspersonal in einer Dunkelkammer von eine Testfilmrolle ein bestimmtes Filmstück abschneiden und in eine an den Filmprozessor anschließbare Filmpatrone einführen. Anschließend wurde die Patrone in eine Filmladekassette eingesetzt. Eine Leaderkarte wurde vor den Testfilmabschnitt gesetzt, mit diesem verklebt und anschließend mittels der Filmladekassette in den Filmprozessor eingeführt, durch dessen Entwicklungsbereich hindurchgeführt und an dessen Ende wieder entnommen, um die angesprochene Transmissionsdichtemessung durchführen zu können. Das Bedienungspersonal kann an Kerbmarkierungen des Testfilms auf der Filmrolle erkennen, wo der erforderliche Testfilmstreifen von der Testfilmrolle abgeschnitten werden muß.

Andererseits existieren entsprechende Problematiken auch bei Entwicklungsbereichen von Papierprozessoren.

Um den chemischen Zustand der Behandlungsbäder von fotografischen Papierprozessoren zu prüfen bzw. zu messen, stellen die Kopierpapierhersteller sog. Teststreifen in Form von Einzelblättern zur Verfügung. Diese Teststreifen sind bereits mit einem genau definierten Testmuster vorbelichtet. Für einen Chemie-Test wird ein solcher Teststreifen durch den Papierprozessor oder das gesamte Minilab transportiert, wobei in letzterem Fall natürlich im Printer keine Belichtung erfolgt. Anschließend wird der entwickelte Teststreifen mit einem Farbmeßgerät ausgemessen und so eine Aussage über den Zustand der Behandlungsbäder im Papierprozessor gewonnen.

Üblicherweise wird jeweils ein solcher Teststreifen in eine speziell dafür ausgebildete Kassette eingelegt und die Kassette wird beim normalen Kopierpapiereingang des Printers bzw. Minilabs angedockt. Auf einen manuellen Steuerbefehl hin wird der Teststreifen motorisch aus der Kassette entnommen und in den normalen Papierpfad des Minilabs eingebracht und so dem Papierprozessor zugeführt.

Bei dieser Vorgehensweise muß also bei jedem Chemie-Test die den Kopierpapiervorrat enthaltende Papierkasseette abgedockt und stattdessen die Teststreifen-Kassette ange dockt werden und umgekehrt. Die Durchführung eines Chemie-Tests ist auf diese Weise releativ umständlich und unbequem.

Durch die vorliegende Erfindung sollen die apparativen Voraussetzungen dafür geschaffen werden, daß die Überprüfung des chemischen Zustands von Behandlungs- bzw. Entwicklungsbädern in einem Filmprozessor bzw. einem fotografischen Printer zugeordneten Entwicklungsgeräten einfacher und bequemer durchgeführt werden kann.

Die Lösung dieser der Erfindung zugrundeliegenden Aufgabe ergibt sich durch eine Einrichtung bzw. einen Printer mit den im Anspruch 1 bzw. Anspruch 10 beschriebenen Merkmalen. Besonders vorteilhafte Ausgestaltungen und Weiterbildungen sind Gegenstand der Unteransprüche.

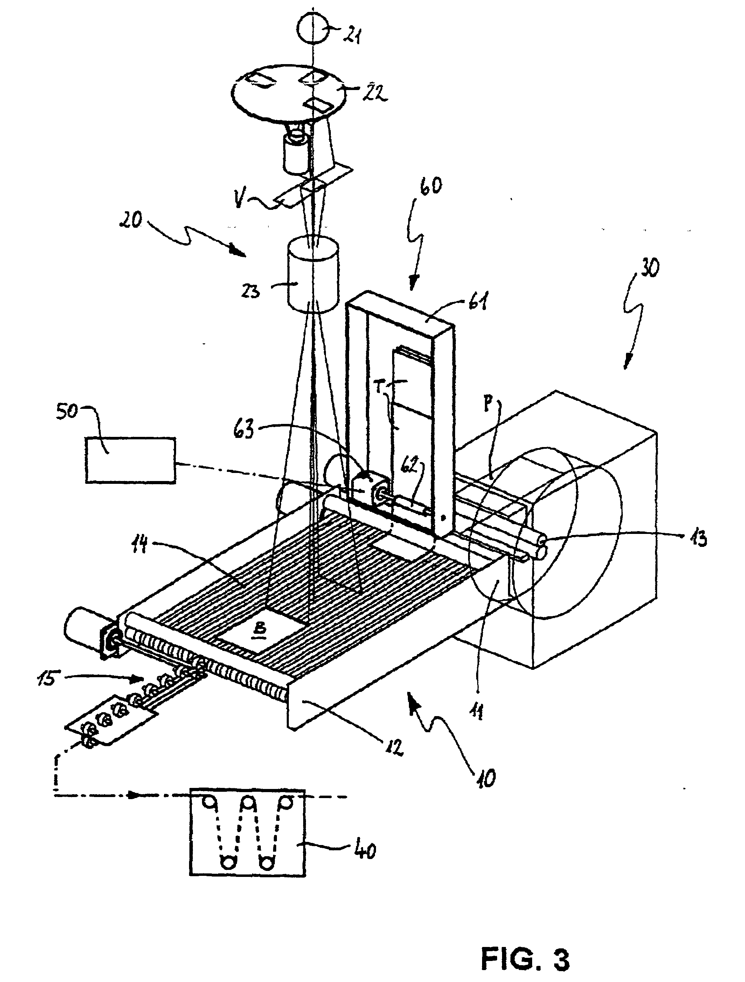

Die gemäß der vorliegenden Erfindung erzielbaren Vorteile beruhen darauf, daß die Prüfmaterialspeicher- und -zuführeinrichtung, die in der Figurenbeschreibung zur Fig. 3 auch als Zuführeinrichtung bezeichnet wird, mit einer Andockeinrichtung versehen ist, die es besonders einfach macht, die erfindungsgemäße Einrichtung beispielsweise an einen Filmprozessor anzusetzen. Dabei kann die Andockeinrichtung beispielsweise in einen Zuführschlitz für Filmmaterial eingesetzt werden, um einen Filmteststreifen in den Filmprozessor bzw. Filmprozessorabschnitt eines Printers einzuführen.

Dabei kann die Andockeinrichtung vorzugsweise wenigstens teilweise in den Einführschlitz bzw. Einführbereich eines Filmprozessor bzw. Filmprozessorabschnittes eines fotografischen Printers eingeführt werden. Dies gewährleistet eine lichtdichte Zuführung eines Filmchemie-Teststreifens.

Bei dieser Ausführung kann das Bedienungspersonal im Bedarfsfalle den lichtdichten Behälter mit einer Vielzahl von Filmchemie-Teststreifen oder einer Rolle mit aneinandergereihten Filmchemie-Teststreifen aus einem Kühlschrank oder dergleichen entnehmen, an den aus dem lichtdichten Behälter am Austragmaul herausschauenden Filmanfang eine Leaderkarte klebt. und die erfindungsgemäße Einrichtung an einen Filmprozessor bzw. den Filmprozessorabschnitt eines Printers ansetzen, wobei über die Andockeinrichtung der Filmchemie-Teststreifen mit der darin angeklebten Leaderkarte in den Filmprozessor eingeführt werden kann.

Vorteilhafterweise weist der lichtdichte Behälter einen Verschluß auf, der zum Austragen eines Prüfabschnitts, d.h. eines Filmchemie-Teststreifens oder eines vorbelichteten Fotopapierabschnitts, geöffnet werden kann. Im einfachsten Falle kann das Austragmaul auch mit einem oder mehreren Filzstreifen lichtdicht gemacht werden.

Diese Filzstreifen können auch noch über Andruckeinrichtungen, beispielsweise einen gefederten Stempel, etwa auch in der Form eines Schwamm- oder Schaumstoffkissens resistenter gemacht werden.

Dabei ist die Andockeinrichtung bevorzugt reversibel an den Behälter ansetzbar, wobei ein Verbindungs- bzw. Trennmechanismus die reversible Ansetzbarkeit gewährleistet. Hier können verschiedene Verbindungs- bzw. Trennmechanismen verwendet werden, beispielsweise reversible Rasteinrichtungen, Schiebeelemente oder dergleichen. Auch kann zur Verriegelung der erfindungsgemäßen Einrichtung an dem Filmprozessor bzw. dem Printer eine entsprechende reversible Verriegelungseinrichtung an der erfindungsgemäßen Prüfmaterialspeicher- und -zuführeinrichtung oder am Filmprozessor bzw. Printer vorgesehen sein.

Zur Überprüfung der Länge eines eingeführten Prüfmaterialabschnittes ist die erfindungsgemäße Einrichtung mit einer Fühleinrichtung versehen sein, die insbesondere auf eine Markierung, etwa eine Kerbe oder dergleichen, anspricht, um ein Signal auszulösen bzw. eine Trenneinrichtung, etwa ein Messer, auszulösen, das den betreffenden Prüfmaterialabschnitt etwa von einem Endlosmaterialgebinde, beispielsweise einer Filmrolle, abschneidet.

Insofern das Prüfmaterial, etwa ein vorbelichtetes Fotopapier, temperaturempfindlich ist, kann der lichtdichte Behälter auch mit einer Kühleinrichtung versehen sein. Hier kommen zwar verschiedene Einrichtungen in Betracht, einschließlich Kühlmitteln in Verbindung mit einer Wärmepumpe und dergleichen, jedoch sind elektrische Einrichtungen, wie etwa Peltierelemente, zu bevorzugen.

Nachfolgend wird die vorliegende Erfindung anhand von bevorzugten Ausführungsformen unter Bezugnahme auf die beigefügten Figuren näher erläutert. Dabei werden weitere Merkmale, Vorzüge und Zielsetzungen gemäß der vorliegenden Erfindung offenbart. In den Darstellung zeigen:
- Fig. 1: eine erfindungsgemäße Prüfmaterialspeicher- und -zuführeinrichtung für Filmchemie-Teststreifen in einer vogelperspektivischen Ansicht;
- Fig. 2: die Einrichtung gemäß Fig. 1 in einer perspektivischen Ansicht des Unterteils der Ausführungsform gemäß Fig. 1; und
- Fig. 3: eine Prüfmaterialspeicher und -zuführeinrichtung für vorbelichtete Fotopapierstreifen in eine Einbausituation an einem fotografischen Printer in einer perspektivischen, schematischen Ansicht.

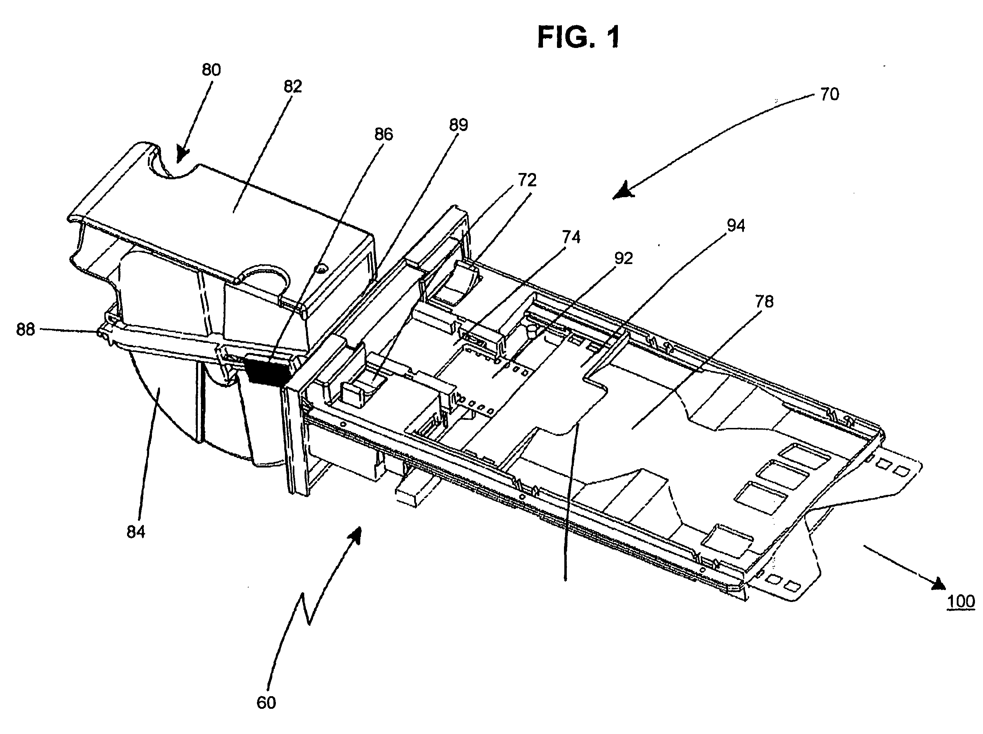

In Fig. 1 ist eine Prüfmaterialspeicher- und -zuführeinrichtung 60 mit Merkmalen gemäß der Erfindung dargestellt. Diese weist einen lichtdichten Behälter 80 und eine Andockeinrichtung 70 auf. Der lichtdichte Behälter 80 weist an seinem der Andockeinrichtung 70 zugewandten Ende ein Austragmaul 89 auf, über das ein Filmchemie-Teststreifen 92 in die Andockeinrichtung 70 eingeführt werden kann.

Der lichtdichte Behälter 80 weist einen oberen Abschnitt 82 und einen unteren Abschnitt 84 auf, die trennbar sind, beispielsweise, um eine Rolle mit Filmchemie-Teststreifen einzulegen. Eine Trennlinie zwischen dem oberen Abschnitt 82 des Behälters 80 und dem unteren Abschnitt 84 beginnt an einem Scharnierbereich 88 und zieht sich bis zu einer Verschlußeinrichtung 86 bzw. dem Austragmaul 89. Die Verschlußeinrichtung 86 kann dazu verwendet werden, um, wenn die Andockeinrichtung 70 von dem Behälter 80 abgenommen ist, den Behälter 80 lichtdicht zu verschließen. Ferner kann in diesem Bereich auch ein Verbindungs- bzw. Trennmechanismus vorgesehen sein, um die erfindungsgemäße Einrichtung an einem Filmprozessor (nicht dargestellt) bzw. einem Printer (nicht dargestellt) festzulegen, wobei das Prüfmaterial bzw. der Filmchemie-Teststreifen 92 in Richtung des Pfeiles 100 ausgezogen und befördert wird.

Um eine neue Rolle mit Teststreifen 92 bzw. auch einzelne Teststreifen in den Behälter 80 einlegen zu können, kann einer der Abschnitte 82, 84 des Behälters 80 weggeklappt oder abgenommen werden.

Die Andockeinrichtung 70 weist einen Einfädelabschnitt 74 auf, über den ein Filmchemie-Teststreifen 92 lichtdicht aus dem Behälter 80 ausgetragen werden kann. Der Behälter 80 kann über einen Verbindungs- bzw. Trennmechanismus, von dem hier lediglich Schieberelemente 72 wiedergegeben sind, reversibel mit der Andockeinrichtung 70 verbunden werden. Durch Betätigung der Schieberelemente 72 können der Behälter 80 und die Andockeinrichtung 70 voneinander getrennt werden. Beim Trennen kann ein am Austragmaul 89 vorhandener Verschluß automatisch zuschnappen, um das Eindringen von Licht in den Behälter 80 zu verhindern. Auch ein nicht dargestellter, über ein Schaumstoffkissen abgefederter Filzstreifen kann verwendet werden, um das Austragmaul 89 lichtdicht zu machen. Ansonsten empfiehlt sich als Verschluß hier besonders ein federvorgespannter Klapp- oder Schiebeverschluß, der im verschlossenen Zustand das Austragmaul lichtdicht verschließt.

An dem dem Behälter 80 abgewandten Ende der Andockeinrichtung 70 ist eine Leaderkarte 94 so in einer Halterung 78 gehalten, daß der Filmchemie-Teststreifen 92 mit der Leaderkarte 94 in einer ausgerichteten Art und Weise, beispielsweise durch Verkleben, angesetzt werden kann.

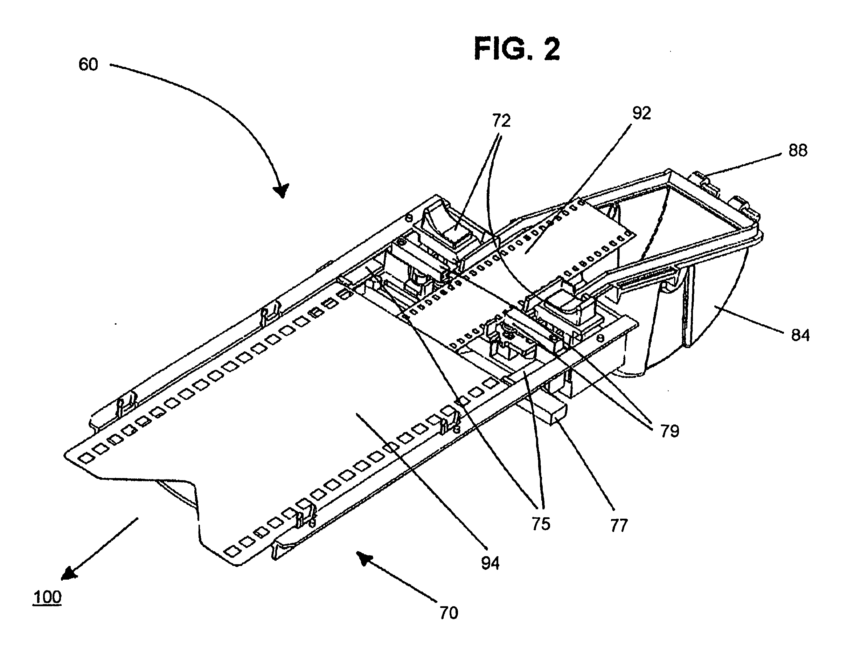

In der Fig. 2 sind gleiche bzw. wenigstens gleich wirkende Bestandteile mit den gleichen Bezugszeichen benannt, wie in Fig. 1, so daß sich deren gesonderte Beschreibung damit erübrigt.

Über die gemäß Fig. 2 bei der erfindungsgemäßen Einrichtung 60 erkennbaren Merkmale hinaus ist hier zu bemerken, daß der obere Abschnitt 82 des Behälters weg geklappt bzw. entfernt worden ist, so daß in den unteren Bereich 84 des Behälters 80 ein Einblick gewährt wird.

Die Andockeinrichtung 70 weist Fühleinrichtungen 79 auf, die den Rand des Filmchemie-Teststreifens 92 nach Markierungen, hier insbesondere Kerben, abtasten. Sobald eine Kerbe an einem Rand bzw. jeweilige Kerben an den Rändern des Teststreifens 92 ertastet worden sind, wird ein Signal an eine Auslöseeinrichtung 77 weitergegeben, die ein hier nicht erkennbares Trennwerkzeug, etwa ein Messer, auslöst, um einen Teststreifen 92 der gewünschten Länge von der Filmrolle mit einer Vielzahl von Teststreifen 92 zu trennen.

In der konkreten Ausführung sind hier Rollen an den sog. "Filmnotch-Hebeln" 79 vorhanden, die in die Kerben an dem Teststreifen 92 einschnappen, wobei der Hebel eine Schwenkbewegung in Filmlaufrichtung 100 durchführt, um die Einrichtung 77, etwa einen Sensors, zur Betätigung der Trenneinrichtung auszulösen. Die Trenneinrichtung kann oberhalb des lichtdichten Behälters angebracht sein und schneidet den Film im Bereich zwischen der Leaderkarte 94 und dem Film durch.

Der Filmchemie-Teststreifen kann nun an der Leaderkarte 94 durch die Entwicklungsvorrichtung des Filmprozessor hindurchgeleitet werden, wenn die Andockeinrichtung in ihrer passenden Position an dem Filmprozessor angeordnet worden ist.

Die Fig. 3 zeigt eine schematische Darstellung der für das Verständnis der Erfindung relevanten Teile eines Ausführungsbeispiels des erfindungsgemäßen fotografischen Printers mit einer erfindungsgemäßen Prüfmaterialspeicher- bzw. -zuführeinichtung 60.

Der dargestellte fotografische Printer umfaßt im wesentlichen eine Papierbühne 10 mit einer Zufuhrseite 11 und einer Abfuhrseite 12 sowie (hier) oberhalb der Papierbühne angeordnete Belichtungsmittel 20 zur einer Kopiervorlage V entsprechenden bildmäßigen Belichtung von auf der Papierbühne befindlichem, unbelichtetem fotografischen Blattmaterial B. Die Belichtungsmittel 20 umfassen eine Kopierlichtquelle 21, symbolisch als Filterrad 22 dargestellte Mittel zur Einfärbung des Kopierlichts und ein Bildungsobjektiv 23.

Auf der Zufuhrseite 11 der Papierbühne 10 befinden sich eine an- und abdockbare Papierkassette 30 mit einem Vorrat an unbelichtetem fotografischen Kopierpapier P sowie erste Transportmittel 13, welche Kopierpapier aus der Papierkassette 30 ausziehen, Blätter der jeweils erforderlichen Länge abschneiden und diese Blätter B der Papierbühne 10 zuführen. In der Papierbühne 10 befinden sich zweite Transportmittel 14, welche das ihr zugeführte Blattmaterial B über die Papierbühne von der Zufuhrseite 11 zur Abfuhrseite 12 transportieren. Auf der Abfuhrseite 12 der Papierbühne 10 befinden sich dritte Transportmittel 15, welche das nach dem Durchlaufen der Papierbühne belichtete Blattmaterial B von der Papierbühne übernehmen und einem an den Printer nachgeschalteten Papierprozessor 40 zuführen. Eine Steuerung 50 arbeitet mit den Transportmitteln 13-15 und den Belichtungsmitteln 20 zusammen und steuert deren Funktionen.

Soweit entspricht der dargestellte fotografische Printer vollumfänglich herkömmlichen, für Einzelblattverarbeitung geeigneten Printern, wie sie insbesondere in sog. Minilabs eingesetzt werden, so daß sich soweit eine nähere Erläuterung für den Fachmann erübrigt.

Gemäß dem grundlegenden Gedanken der Erfindung ist der Printer zusätzlich noch mit einer Zuführvorrichtung 60 für vorbelichtetes fotografisches Blattmaterial (Teststreifen) T ausgestattet. Diese Zuführvorrichtung 60 ist an der Zufuhrseite 11 oberhalb der Papierbühne 10 angeordnet und dazu ausgebildet, in Zusammenarbeit mit der Steuerung 50 auf einen entsprechenden Auslösebefehl hin ein einzelnes Blatt T des vorbelichteten fotografischen Blattmaterials, also einen Teststreifen, auf die Papierbühne 10 zu führen, so daß das Blatt von den zweiten Transportmitteln 14 erfaßt und wie die unbelichteten Einzelblätter B des Kopierpapiers weitertransportiert werden kann.

Die an den Printer lösbar angedockte Zuführvorrichtung 60 umfaßt eine Kassette 61, welche mehrere, beispielsweise etwa 20 Teststreifen T aufzunehmen imstande ist, sowie eine durch eine Transportwalze 62 und einen Antriebsmotor 63 gebildete Ausgabevorrichtung, welche gesteuert durch die Steuerung 50 jeweils einen einzelnen Teststreifen T aus der Kassette 61 auswirft und der Papierbühne 10 zuführt.

Wenn die Chemie des dem Printer nachgeschalteten Papierprozessors 40 getestet werden soll, teilt dies die Bedienungsperson der Steuerung 50 durch Eingabe eines entsprechenden Befehls, z.B. durch Drücken einer dafür vorgesehenen Taste, mit. Die Steuerung 50 löst dann die Ausgabe eines Teststreifens T aus der Zuführvorrichtung 60 aus. Der Teststreifen T wird (ohne Belichtung) über die Papierbühne 10 transportiert und dem nachgeschalteten Papierprozessor 40 zugeführt. Nach dem Verlassen des Papierprozessors wird der entwickelte Teststreifen in üblicher Weise mittels eines Farbmeßgeräts ausgemessen und anhand der Meßergebnisse einer Aussage über den Zustand der Chemie gewonnen.

Durch die Verwendung einer Kühleinrichtung (nicht gezeigt), beispielsweise einem oder mehreren Peltierelementen, kann es dann auch verhindert werden, daß sich das Testmaterial durch Alterung oder Nachreifen der Emulsion verändert, so daß es zu Farbverschiebungen kommt, die ein Testergebnis mit einer brauchbaren Aussage zur Verwendbarkeit der Chemie für die Entwicklung unmöglich machen könnten.

Durch die erfindungsgemäß zusätzlich vorgesehene Zuführvorrichtung für Teststreifen erübrigt sich das häufige Abdocken der Papierkassette für einen Chemie-Test, so daß solche Chemie-Tests gegenüber dem Stand der Technik wesentlich einfacher und bequemer durchführbar sind.

## Patentansprüche

1. Prüfmaterialspeicher- und -zuführeinrichtung (60) mit einem lichtdichten Behälter (80), um fotografisches Material (92; T) als Prüfmaterial aufzunehmen, wobei der Behälter (80) ein Austragmaul (89) aufweist, um das fotografische Material (92; T) in Form von Prüfabschnitten aus dem Behälter (80) auszutragen, und mit einer an dem Austragmaul (89) ansetzbaren Andockeinrichtung (70) , die an eine entsprechende Einführöffnung eines Printers, Filmprozessors oder dergleichen ansetzbar bzw. wenigstens teilweise in diese einsetzbar ist, **dadurch gekennzeichnet, dass** die Andockeinrichtung (70) eine Fühleinrichtung (79) aufweist, um eine Markierung am Prüfabschnitt (92), etwa eine Kerbe oder dergleichen, zu erfassen.

2. Einrichtung nach Anspruch 1, **dadurch gekennzeichnet, daß** am Austragmaul (89) ein Verschluß (86) angeordnet ist, der zum Austragen eines Prüfabschnitts (92; T) geöffnet werden kann.

3. Einrichtung nach einem der Ansprüche 1 oder 2, **dadurch gekennzeichnet, daß** die Andockeinrichtung (70) an den Behälter (80) und/oder daß der Behälter in Verbindung mit der Andockeinrichtung an einen Filmprozessor bzw. Printer reversibel ansetzbar ist, wobei ein oder jeweils ein Verbindungs- bzw. Trennmechanismus (72) die reversible Ansetzbarkeit gewährleistet.

4. Einrichtung nach Anspruch 3, **dadurch gekennzeichnet, daß** der Verbindungs- bzw. Trennmechanismus wenigstens einen Eingriffs- bzw. Rastabschnitt aufweist, der an dem Behälter bzw. der Andockeinrichtung vorgesehen ist.

5. Einrichtung nach einem der Ansprüche 1 bis 4, **dadurch gekennzeichnet, daß** eine Trenneinrichtung, etwa ein Messer, im Bereich der Andockeinrichtung (70) bevorzugt nahe des Austragmauls (89) angeordnet ist, um den Prüfabschnitt (92) von einem Vorratsgebinde zu trennen, wobei die Trenneinrichtung bevorzugt auf ein Signal hin aktiv wird, das eine bzw. die Fühleinrichtung (79) ausgibt.

6. Einrichtung nach einem der Ansprüche 1 bis 5, **dadurch gekennzeichnet, daß** im Bereich der Andockeinrichtung (70) ein Führungsbereich (78) vorgesehen ist, in den eine Leaderkarte (94) einsetzbar und durch diese führbar ist, wobei mit der Leaderkarte (94) der Prüfabschnitt (92) verbindbar bzw. verklebbar ist.

7. Einrichtung nach einem der Ansprüche 1 bis 6, **dadurch gekennzeichnet, daß** der lichtdichte Behälter (80) an eine Kühleinrichtung angeschlossen bzw. damit ausgestattet ist, etwa eines oder mehrere Peltierelemente oder dergleichen.

8. Einrichtung nach einem der Ansprüche 1 bis 4 oder 7, **dadurch gekennzeichnet, daß** ein Ausgabemittel (62, 63) vorgesehen ist, mittels dessen das Prüfmaterial (92; T) aus dem lichtdichten Behälter entnehmbar ist, wobei dieses (62, 63) bevorzugt über eine Steuereinrichtung (50) ansteuerbar bzw. auslösbar ist.

9. Einrichtung nach einem der Ansprüche 1 bis 8, **dadurch gekennzeichnet, daß** das Prüfmaterial in der Form von vorbelichtetem Blattmaterial (T), insbesondere als einzelne Blätter oder als belichtete Filmchemie-Teststreifen (92), insbesondere als Rollmaterial, vorliegt.

10. Fotografischer Printer mit einer eine Zufuhrseite (11) und eine Abfuhrseite (11) aufweisenden Papierbühne (10), ersten Transportmitteln (13) zum Zuführen von unbelichtetem fotografischem Blattmaterial (B) auf die Zufuhrseite der Papierbühne, zweiten Transportmitteln (14) zum Bewegen des Blattmaterials über die Papierbühne von der Zufuhrseite zu der Abfuhrseite und dritten Transportmitteln (15) zum Entnehmen des Blattmaterials auf der Abführseite der Papierbühne sowie mit Belichtungsmitteln (20) zum bildmäßigen Belichten von auf der Papierbühne befindlichem Blattmaterial (B) und mit einer Steuerung (50), die mit den Transportmitteln (13-15) und den Belichtungsmitteln (20) zusammenarbeitet und diese steuert, **gekennzeichnet durch** eine Prüfmaterialspeicher- und -zuführeinrichtung (60) nach einem der Ansprüche 1 bis 9.

11. Printer nach Anspruch 10, **dadurch gekennzeichnet, daß** die Steuerung (50) des Printers die Ausgabemittel (62, 63) ansteuert bzw. auslöst, insbesondere um,Einzelabschnitte (T) auszutragen.

12. Vorrichtung zur Herstellung von fotografischen Kopien mit einem gemäß einem der Ansprüche 10 oder 11 ausgebildeten fotografischen Printer und einem daran angeschlossenen Papierprozessor (40).

## Claims

1. A test material storage and feed device (60) comprising a light-proof container (80) for receiving photographic material (92; T) as a test material, wherein the container (80) has a delivery mouth (89) for delivering the photographic material (92; T) in the form of test sections from the container (80), and comprising a connecting device (70) which may be placed against the delivery mouth (89) and placed against and/or placed partially into a corresponding inlet opening of a printer, a film processor device or the like, **characterised in that** the connecting device (70) comprises a sensor device (79) to detect a marking on the test section (92), for instance a notch or the like.

2. The device in accordance with claim 1, **characterised in that** a cover (86) is arranged at the delivery mouth (89) and can be opened for removing a test section (92; T).

3. The device in accordance with any one of claims 1 or 2, **characterised in that** the connecting device (70) can be reversibly placed against the container (80) and/or **in that** the container together with the connecting device can be reversibly placed against said film processor device and/or said printer, wherein a connecting and/or separating mechanism (72) assures or respectively assures that it can be reversibly placed.

4. The device in accordance with claim 3, **characterised in that** said connecting and/or separating mechanism comprises at least one engagement and/or snap-on section which is provided on the container and/or on the connecting device.

5. The device in accordance with any one of claims 1 to 4, **characterised in that** a separating device, for instance a knife, is arranged in the area of the connecting device (70), preferably near the delivery mouth (89), for separating the test section (92) from a supply body, wherein the separating device is preferably activated by a signal which one and/or the sensor device (79) outputs.

6. The device in accordance with any one of claims 1 to 5, **characterised in that** a guide area (78) is provided in the area of the connecting device (70), into which a leader card (94) can be inserted and through which said leader card (94) can be guided, wherein the test section (92) can be connected and/or adhered to the leader card (94).

7. The device in accordance with any one of claims 1 to 6, **characterised in that** the light-proof container (80) can be connected to or fitted with a cooling device for instance one or more Peltier elements or the like.

8. The device in accordance with any one of claims 1 to 4 or 7, **characterised in that** a delivery means (62, 63) is provided, by means of which the test material (92; T) can be removed from the light-proof container, wherein said delivery means (62, 63) can preferably be controlled or triggered by a control device (50).

9. The device in accordance with any one of claims 1 to 8, **characterised in that** the test material is provided in the form of pre-exposed sheet material (T), in particular as individual sheets, or as exposed chemical film test strips (92), in particular as roll material.

10. A photographic printer, comprising: a paper stage (10) comprising an inlet side (11) and an outlet side (11); first transport means (13) for feeding unexposed photographic sheet material (B) to the inlet side of the paper stage; second transport means (14) for moving the sheet material over the paper stage from the inlet side to the outlet side; and third transport means (15) for removing the sheet material on the outlet side of the paper stage; and comprising: exposure means (20) for exposing an image area of the sheet material (B) located on the paper stage; a control device (50) which co-operates with and controls said transport means (13-15) and said exposure means (20); **characterised by** a testing material storage and feed device (60) in accordance with any one of claims 1 to 9.

11. The printer in accordance with claim 10, **characterised in that** the control device (50) of the printer controls or triggers the delivery means (62, 63), in particular for delivering individual sections (T).

12. A means for producing photographic copies, comprising a photographic printer formed in accordance with any one of claims 10 or 11 and a paper processor (40) connected to said printer.

## Revendications

1. Dispositif (60) de stockage et de transfert de matériau d'essai avec un récipient (80) étanche à la lumière, afin de recevoir un matériau photographique (92 ; T) servant de matériau d'essai, le récipient (80) présentant une bouche de sortie (89) afin de faire sortir le matériau photographique (92 ; T) sous forme de sections d'essai depuis le récipient (80), et avec un dispositif d'accrochage (70) pouvant être rapporté sur la bouche de sortie (89), qui peut être rapporté ou au moins partiellement inséré sur/dans une ouverture d'introduction correspondante d'une tireuse, d'une développeuse de films ou analogue, **caractérisé en ce que** le dispositif d'accrochage (70) présente un dispositif capteur (79) afin de détecter un marquage sur la section d'essai (92), par exemple une encoche ou analogue.

2. Dispositif selon la revendication 1, **caractérisé en ce qu'**à la bouche de sortie (89) est associée une fermeture (86) qui peut être ouverte pour faire sortir une section d'essai (92 ; T).

3. Dispositif selon l'une des revendications 1 ou 2, **caractérisé en ce que** le dispositif d'accrochage (70) peut être rapporté de manière réversible sur le récipient (80) et/ou **en ce que** le récipient peut être rapporté de manière réversible sur une développeuse de films ou une tireuse en liaison avec le dispositif d'accrochage, un ou à chaque fois un mécanisme de liaison resp. de séparation (72) garantissant la réversibilité du montage.

4. Dispositif selon la revendication 3, **caractérisé en ce que** le mécanisme de liaison resp. de séparation présente au moins une section de prise ou d'encliquetage qui est prévue sur le récipient ou sur le dispositif d'accrochage.

5. Dispositif selon l'une des revendications 1 à 4, **caractérisé en ce qu'**un dispositif de séparation, par exemple une lame, est placé au niveau du dispositif d'accrochage (70) de préférence près de la bouche de sortie (89), afin de séparer la section d'essai (92) d'un récipient de réserve, le dispositif de séparation étant actif de préférence à la suite d'un signal qui est délivré par un ou le dispositif capteur (79).

6. Dispositif selon l'une des revendications 1 à 5, **caractérisé en ce qu'**au niveau du dispositif d'accrochage (70) est prévue une zone de guidage (78) dans laquelle une carte d'amorce (94) peut être introduite et guidée dans celui-ci, la section d'essai (92) pouvant être reliée ou collée à la carte d'amorce (94).

7. Dispositif selon l'une des revendications 1 à 6, **caractérisé en ce que** le récipient (80) étanche à la lumière est raccordé à un dispositif de refroidissement ou peut être équipé de celui-ci, par exemple un ou plusieurs éléments Peltier ou analogues.

8. Dispositif selon l'une des revendications 1 à 4 ou 7, **caractérisé en ce qu'**il est prévu un moyen de prélèvement (62, 63) au moyen duquel le matériau d'essai (92 ; T) peut être prélevé du récipient étanche à la lumière, celui-ci pouvant être commandé ou déclenché de préférence par l'intermédiaire d'un dispositif de commande (50).

9. Dispositif selon l'une des revendications 1 à 8, **caractérisé en ce que** le matériau d'essai est présent sous la forme d'un matériau en feuille (T) pré-exposé, en particulier des feuilles séparées, ou sous forme de bandes de test de chimie photographique exposées (92), en particulier un matériau en rouleau.

10. Tireuse photographique avec un plateau à papier (10) présentant un côté d'introduction (11) et un côté de sortie (11), des premiers moyens de transport (13) pour introduire un matériau photographique en feuilles non exposé (B) du côté d'introduction du plateau à papier, des deuxièmes moyens de transport (14) pour déplacer le matériau en feuilles sur le plateau à papier du côté d'introduction au côté de sortie, et des troisièmes moyens de transport (15) pour prélever le matériau en feuille du côté de sortie du plateau à papier, ainsi qu'avec des moyens d'exposition (20) pour exposer une image sur le matériau en feuille (B) situé sur le plateau à papier et avec une commande (50) qui coopère avec les moyens de transport (13-15) et avec les moyens d'exposition (20) et commande ceux-ci, **caractérisée par** un dispositif (60) de stockage et de transfert de matériau d'essai selon l'une des revendications 1 à 9.

11. Tireuse selon la revendication 10, **caractérisée en ce que** la commande (50) de la tireuse commande ou déclenche les moyens de sortie (62, 63), en particulier pour faire sortir des sections séparées (T).

12. Dispositif de réalisation de copies photographiques avec une tireuse photographique selon l'une des revendications 10 ou 11 et avec une développeuse à papier (40) placée après.
